# FASCICULE DE BREVET EUROPEEN

(11) **EP 0 504 018 B1**
(45) Date de publication et mention de la délivrance du brevet: **24.05.1995**
(21) Numéro de dépôt: 92400580.4
(22) Date de dépôt: 06.03.1992
(51) Int. Cl.: H04B 7/26, H01Q 3/26, G08G 1/0962, H04B 7/14, H04B 1/59

(54) **Perfectionnement aux réseaux isofréquence**
Verbesserung an Gleichfrequenzfunknetzwerken
Improvement to isofrequential radio networks

(30) Priorité: 08.03.1991 FR 9102798
(43) Date de publication de la demande: 16.09.1992
(73) Titulaire: COMPAGNIE FINANCIERE ET INDUSTRIELLE DES AUTOROUTES, F-75016 Paris (FR)
(72) Inventeur: Chemin, Henri, F-75016 Paris (FR)
(74) Mandataire: Serin, Jean-Pierre

(56) Documents cités:
- EP-A- 0 291 676
- EP-A- 0 370 915
- IEEE TRANSACTIONS ON VEHICULAR TECHNOLOGY. vol. VT-19, no. 1, Février 1970, NEWYORK US pages 69 - 73; F.B.WOODWORTH: 'A Total Highway Communications SystemUsing F1-F1 Repeaters'
- World Patents Index,semaine 8744,17 sept.1987 Derwent Publications Ltd,Londres,gb,wo2 r48 No.87-307065/44; & AU-A-8 770 041(ANTENNA SIGNAL) 17-09-1987

## Description

L'invention concerne un procédé et un dispositif de radiodiffusion à isofréquence à interférences atténuées, destiné à la réception à bord d'un véhicule et sur la même fréquence, d'un même programme tout le long du trajet parcouru, et plus particulièrement un perfectionnement à celui-ci.

Dans le document FR-A-2 639 492, la déposante décrit un procédé et un dispositif du type précité dans lequel on dispose, le long du trajet, des émetteurs, des réémetteurs ou des amplificateurs, appelés ci-après relais, placés entre antennes d'émission et de réception, et calés sur la même fréquence, lesdits relais étant directionnels et deux relais consécutifs étant dirigés approximativement dans la même direction. Selon cette demande, on utilise des groupements directionnels d'antennes élémentaires décalées dans l'espace de λ/4 et alimentés de telle façon que les champs émis s'ajoutent dans la direction de l'émission et se soustraient pour s'annuler dans la direction opposée.

Dans le système précité, les relais successifs sont disposés intervalles de 5 à 7 Km selon le terrain, de sorte que, leur puissance n'étant que de l'ordre de 10 W, chaque relais (n) reçoit, dans le cas de figure le plus courant, le signal du précédent (n-1) mais pas, ou fortement atténué, celui du relais encore avant (n-2).

Or, dans certains cas de profil de terrain, l'un quelconque des relais de la chaîne peut aussi recevoir un signal du relais n-2, n-3, voire n-4.

En pratique, la puissance étant relativement faible les signaux n-3, n-4 ...etc... sont trop fortement atténués pour devoir être pris en compte. Par contre il faudra tenir compte du signal n-2.

Il en résulte que l'on va effectuer, en n, la somme de deux tensions, celle des signaux provenant des relais n-1 et n-2, ces signaux ayant parcouru le même trajet, mais l'un étant décalé par rapport à l'autre du temps de transit d'un relais, le relais n-1, c'est à dire de 2,5 à 4 »s.

On va donc avoir une modulation d'amplitude fonction de la fréquence. Ce phénomène va encore être aggravé par le fait que les filtres de chaque relais présentent des variations de temps de retard de groupe non négligeables. Ces variations, bien que symétriques, vont augmenter la modulation en amplitude du signal retransmis.

A titre d'exemple, à 108 MHz la détérioration du signal sur trois relais n, n-1 et n-2, (ensemble que l'on nommera ci-après triplet), peut atteindre 2,5 dB pour un rapport d'amplitude -10 dB du signal provenant de n-2. C'est à dire que la tension du signal reçu de n-2 fait 30% de celle du signal de n-1.

Si l'on prend maintenant une chaîne de huit relais, celle-ci présenterait donc sur son diagramme amplitude/fréquence un creux ou une bosse , voire une pente de plus de 10 dB, ce qui produirait, à l'entrée du huitième relais, une modulation d'amplitude, synchrone avec la modulation de fréquence utilisée, dépassant 50% !

Le défaut précité entraîne un étalement de la zone de raccordement (zone dans laquelle le signal reçu du relais R₍ₙ₋₁₎ par le récepteur du véhicule a la même amplitude que le signal reçu à l'arrière du relais R₍ₙ₎), ce qui occasionne une gène notable lorsque le véhicule parcours cette zone tous les 7 à 10 Km. La puissance dans les creux de modulation est bien sur réduite, ce qui limite encore le confort d'écoute et même la portée.

La présente invention vise à pallier ces inconvénients pour permettre une réception non perturbée de l'émission de chaque relais et ainsi un meilleur confort d'écoute.

Ce but est atteint selon l'invention en ce que le signal de sortie d'un ou plusieurs émetteurs de la chaîne est déphasé d'une demi onde, soit de 180° afin de compenser les déformations de la courbe du signal émis par chaque relais, déformations dues aux différences de temps de trajet des différents signaux reçus et additionnés dans ce relais et/ou les précédents.

Le dispositif selon l'invention est caractérisé en ce qu'il comporte un dispositif de déphasage d'une demi-onde du signal émis.

Selon l'invention, ce dispositif de déphasage est constitué par un câble coaxial de longueur égale à λ/2, λ étant la longueur d'onde du signal émis.

L'invention sera mieux comprise au moyen d'un exemple de réalisation décrit ci-après à l'aide des figures sur lesquelles:
La Figure 1 montre une chaîne de relais selon le document FR-A-2 639 492;
La figure 2 montre la combinaison des tensions sur trois relais non alignés (triplet);
La figure 3 montre la chaîne de relais selon la présente invention;
La figure 4 montre la combinaison de signaux grâce à l'invention;
La figure 5 montre la courbe amplitude/fréquence d'un relais.

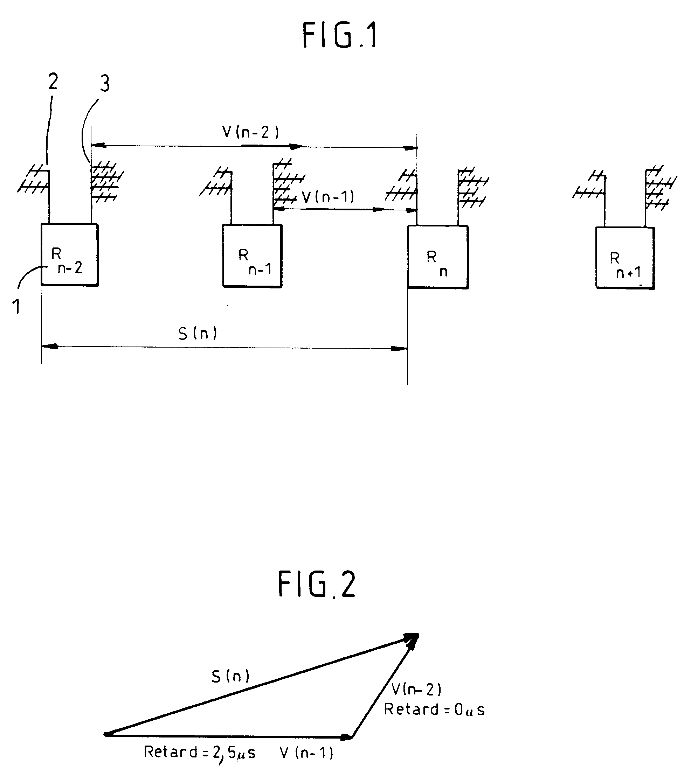

Sur la figure 1 on a représenté une chaîne de réémetteurs ou relais n-2, n-1, n, n+1 ... disposés comme on l'a décrit dans le document FR-A-2 639 492.

Chaque relais 1 (n) comporte une antenne de réception 2 du signal provenant du relais précédent (n-1), et une antenne d'émission 3 en direction du relais suivant (n+1).

Selon la demande de brevet précitée, les antennes 2 et 3 sont constituées chacune d'au moins un groupe de deux demi-antennes espacées entre elles d'une distance de λ/4. Ces groupes sont alimentés de façon que les champs émis par les demi-antennes s'ajoutent dans la direction où l'on veut émettre (direction du tir) et se soustraient dans la direction opposée.

Comme on le voit sur la figure 1, en considérant un premier triplet R₍ₙ₎, R₍ₙ₋₁₎, R₍ₙ₋₂₎, le relais R₍ₙ₎ reçoit d'une part le signal V₍ₙ₋₁₎ du relais R₍ₙ₋₁₎, mais aussi le signal V₍ₙ₋₂₎ du relais R₍ₙ₋₂₎. Le signal reçu par le relais R₍ₙ₎ est donc la somme (vectorielle) S₍ₙ₎ des signaux V₍ₙ₋₁₎ et V₍ₙ₋₂₎ (Le cas sera identique pour le second triplet où le relais R₍ₙ₊₁₎ recevra S(n+1), somme de V₍ₙ₎ et V₍ₙ₋₁₎. Le signal reçu du relais précédent a un retard d'environ 2,5 »s (temps de transit du relais) par rapport au signal arrivant directement du relais encore avant.

La composition de ces signaux est représentée à la figure 2.

La chaîne de relais selon la présente invention est réalisée, de la même manière que la chaîne de relais prédécrite, mais le signal des relais situés dans une zone, où la réception du signal V₍ₙ₋₂₎ est suffisamment forte pour perturber celle du signal V₍ₙ₋₁₎, est déphasé de 180° (λ/2) par un déphaseur 4, de sorte que le signal V₍ₙ₊₁₎ émis par le relais R₍ₙ₊₁₎ va être corrigé.

Ce déphasage est obtenu de toute manière appropriée, par exemple, de façon simple, en ajoutant un câble coaxial de la longueur d'une demi-onde à la sortie de certains relais. Un câble plus court ou plus long que λ/2 produit un inclinaison de la bande passante.

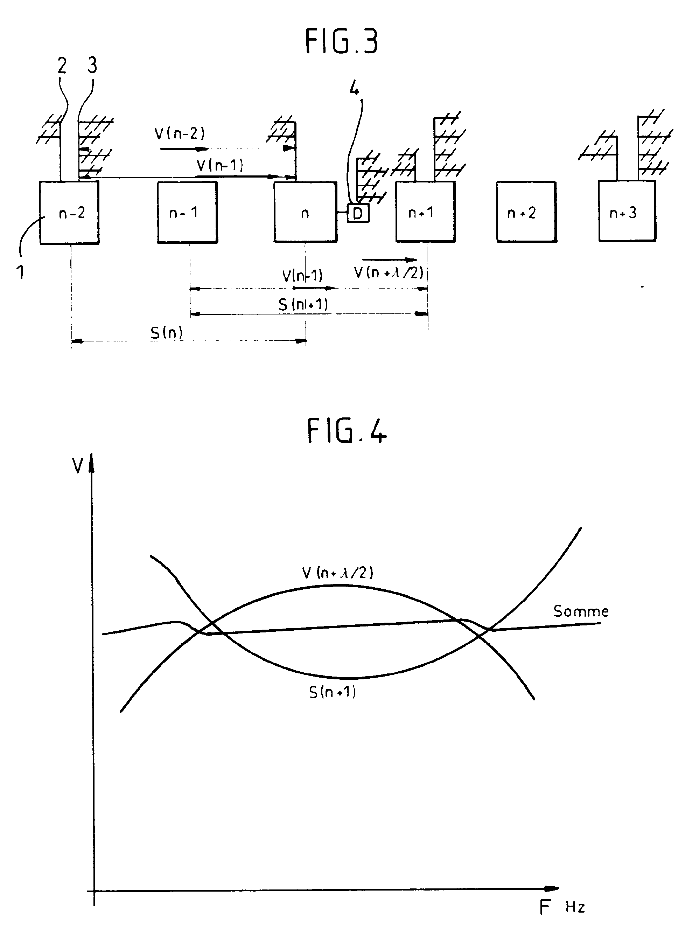

Comme on le voit fortement schématisé sur la figure 4, le défaut est corrigés par l'invention. A la sortie du relais Rₙ, après le déphaseur 4, le signal V₍ₙ₎ déphasé de λ/2 présente une bosse. Ce même signal, non déphasé, présenterait un creux symétrique de la bosse. Ce creux, accentué dans R₍ₙ₊₁₎, se retrouverait dans le signal V₍ₙ₊₁₎ de sortie de R₍ₙ₊₁₎. Comme on est en présence d'un déphasage de λ/2, la sommation des deux effets (creusement de la courbe par l'addition des signaux de n-1 et n-2 dans R₍ₙ₎ puis déphasage pour obtenir une bosse et creusement de la courbe dans R₍ₙ₊₁₎) procure une courbe du signal V₍ₙ₊₁₎ de sortie de R₍ₙ₊₁₎ à peu près plate, se qui supprime la modulation parasite.

En résumé, le différence de marche du premier triplet (R₍ₙ₋₂₎, R₍ₙ₋₁₎, R,₍ₙ₎) produit une courbe amplitude/fréquence en "creux". Comme le deuxième triplet (R₍ₙ₋₁₎, R₍ₙ₎, R₍ₙ₊₁₎) produit le même phénomène, il faut déphaser le premier signal de 180° (λ/2) pour que la courbe amplitude/fréquence soit en "bosse" et que la sommation produise une courbe quasiment plate en fin du deuxième triplet.

De plus les filtres des relais engendrent des creux d'environ 0.15 dB par relais. Si l'on prend une série de huit relais, on se retrouverait normalement avec 1,2 dB après le huitième. Grâce au déphasage à la sortie du relais R₍ₙ₎, le creux ainsi engendré est compensé en même temps.

Un autre avantage du déphasage selon l'invention sur plusieurs relais est que cela rend inutile la limitation d'amplitude au niveau de chaque relais (économie d'un limiteur). En effet cette limitation engendrerait des intermodulation gênantes d'ordre impair avec les réceptions voisines même de faibles amplitudes. Les courbes étant difficiles à rendre parfaitement symétriques, l'écrétage augmenterait les risques de modulation de phase pouvant produire des distorsions non négligeables. La diaphonie droite/gauche et réciproque serait alors augmentée.

Outre le fait que l'on compense les variations d'amplitude (fonctions de la fréquence) créées par les différences de retard, le dispositif selon l'invention a en outre pour effet qu'une compensation de la sélectivité des filtres s'ajoute. On a alors un phénomène d'élargissement de la bande. Ce phénomène est comparable à un couplage surcritique de deux circuits résonnants.

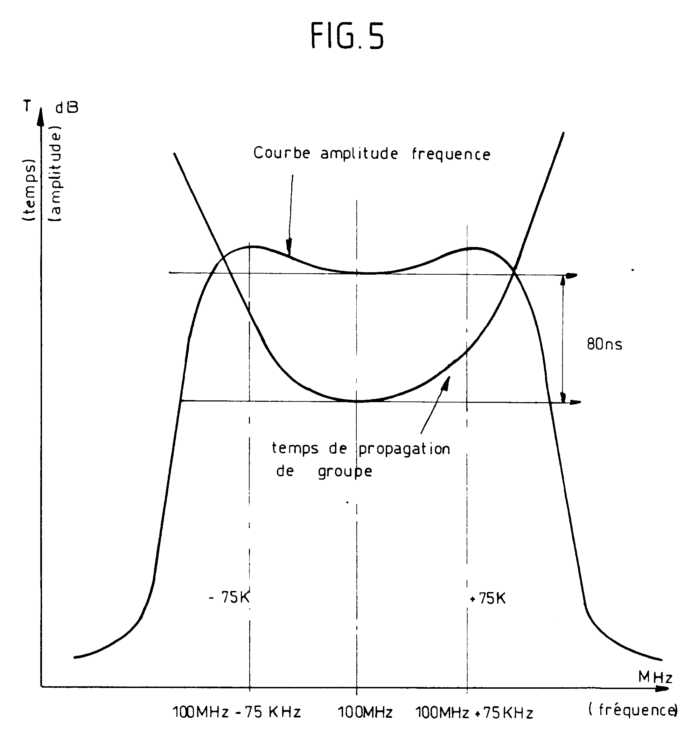

La figure 5 montre la courbe amplitude fréquence d'un relais. Dans l'exemple représenté, la porteuse est de 100 MHz et l'excursion en fréquence d'environ ±75 KHz. Le temps de propagation de groupe est de 80 ns.

Le phénomène de la réception en R₍ₙ₎ d'un signal provenant du relais R₍ₙ₋₂₎ ne se produisant que lorsque certaines conditions de relief sont réunies, il n'est pas nécessaire de monter un déphaseur derrière chaque relais le long de la chaîne. D'autre part, lorsque le déphasage est nécessaire, il n'est pas besoin non plus de déphaser les signaux de sortie de tous les relais, mais seulement un tous les cinq à huit relais.

## Revendications

1. Procédé de radiodiffusion à isofréquence, destiné à la réception à bord d'un véhicule et sur la même fréquence, d'un même programme tout le long du trajet parcouru, dans lequel on dispose, le long du trajet, des relais, placés entre antennes d'émission et de réception, et calés sur la même fréquence, lesdits relais étant directionnels et deux relais consécutifs étant dirigés approximativement dans la même direction, les antennes étant constituées de groupements directionnels d'antennes élémentaires décalées dans l'espace de λ/4, groupements alignés de façon que les champs émis s'ajoutent dans la direction de l'émission et se soustraient pour s'annuler dans la direction opposée caractérisé en ce que le signal de sortie d'un ou plusieurs émetteurs de la channe est déphasé d'une demi onde (180°) afin de compenser les déformations de la courbe du signal émis par chaque relais, dues aux différences de temps de trajet des différents signaux reçus et additionnés dans ce relais et/ou les précédents.

2. Dispositif de retransmission d'une émission de radiodiffusion à partir d'une émission de même de fréquence reçue par le dispositif, constitué d'un relais comportant une antenne directionnelle de réception (2), une antenne directionnelle d'émission (3), caractérisé en ce qu'il comporte un dispositif de déphasage d'une demi-onde du signal émis.

3. Dispositif de retransmission d'une émission de radiodiffusion selon la revendication 2, caractérisé en ce que le dispositif de déphasage est constitué par un câble coaxial de longueur égale à λ/2, λ étant la longueur d'onde du signal émis.

## Patentansprüche

1. Verfahren zur Gleichfrequenz-Funkübertragung, das vorgesehen ist, um ein gleiches Programm entlang des gesamten durchfahrenen Wegs an Bord eines Fahrzeugs und auf der gleichen Frequenz zu empfangen, bei welchem man entlang des Wegs zwischen Sende- und Empfangsantennen angeordnete und auf die gleiche Frequenz eingestellte Relais anordnet, wobei die Relais eine Richtcharakteristik haben und zwei aufeinanderfolgende Relais näherungsweise in die gleiche Richtung ausgerichtet sind, die Antennen aus Gruppen von Elementar-Richtantennen bestehen, die räumlich um λ/4 versetzt sind, wobei die Gruppen derart ausgerichtet sind, daß die ausgesendeten Felder sich in der Abstrahlrichtung überlagern und sich in der entgegengesetzten Richtung subtrahieren, um sich auszulöschen,
**dadurch gekennzeichnet, daß**
das Ausgangssignal eines oder mehrerer Sender der Kette um eine halbe Welle (180°) phasenverschoben ist, um die Verformungen des Frequenzgangs der von jedem Relais ausgesendeten Signale aufgrund der Laufzeitunterschiede der verschiedenen in diesem und / oder den vorhergehenden Relais empfangenen und überlagerten Signale zu kompensieren.

2. Einrichtung zur Übertragung einer Radiosendung, ausgehend von einer von der Einrichtung empfangenen Sendung gleicher Frequenz, wobei die Einrichtung aus einem mit einer Empfangs-Richtantenne (2) und einer Sende-Richtantenne (3) versehenen Relais besteht,
**dadurch gekennzeichnet, daß**
sie eine Einrichtung zur Phasenverschiebung um eine halbe Welle des ausgesendeten Signals aufweist.

3. Einrichtung zur Übertragung einer Radiosendung nach Anspruch 2,
**dadurch gekennzeichnet, daß**
die Einrichtung zur Phasenverschiebung durch ein Koaxialkabel mit einer Länge von λ/2 gebildet ist, wobei λ die Wellenlänge des ausgesendeten Signals ist.

## Claims

1. A method for isofrequency broadcasting, intended for the reception, on-board a vehicle and on the same frequency, of the same program for the entire length of the route travelled, in which relays, placed between transmitting and receiving antennas and set to the same frequency, are arranged along the route, said relays being directional and two consecutive relays being directed approximately in the same direction, the antennas being formed of directional groupings of elementary antennas offset in space by λ/4, which groupings are aligned such that the fields emitted add to each other in the direction of emission and subtract from each other to be cancelled out in the opposite direction, characterised in that the output signal of one or more transmitters of the chain is out-of-phase by half a wave (180°) in order to compensate for the deformations of the curve of the signal emitted by each relay, which are due to the difference in time of passage of the different signals received and added in this relay and/or the previous relays.

2. A device for the retransmission of a broadcasting transmission from a transmission of the same frequency received by the device, formed of a relay comprising a directional receiving antenna (2) and a directional transmitting antenna (3), characterised in that it comprises a device for shifting the phase of the signal transmitted by half a wave.

3. A device for the retransmission of a broadcasting transmission according to Claim 2, characterised in that the phase-shift device is formed by a coaxial cable of a length equal to λ/2, λ being the wavelength of the signal transmitted.
